# EUROPÄISCHE PATENTANMELDUNG

(11) **EP 2 439 026 A1**
(43) Veröffentlichungstag der Anmeldung: **11.04.2012**
(21) Anmeldenummer: 10013381.8
(22) Anmeldetag: 06.10.2010
(51) Int. Cl.: B25J 15/02, B65G 47/90

(54) **Portionsgreifer**

(71) Anmelder: Weber Maschinenbau GmbH Breidenbach, 35236 Breidenbach (DE)
(72) Erfinder: Weber, Günther, 17094 Groß Nemerow (DE)
(74) Vertreter: Grünecker, Kinkeldey, Stockmair & Schwanhäusser

(57) **Zusammenfassung**

Die Erfindung betrifft einen Portionsgreifer zum Aufnehmen eines Produkts mit zwei Schaufelblättern und einem Antriebsmittel, um die Schaufelblätter zwischen einer ersten Position, in welcher die Schaufelblätter auf gegenüberliegenden Seiten des aufzunehmenden Produkts auf eine Auflage für das aufzunehmende Produkt aufsetzbar sind, und einer zweiten Position zu bewegen, in welcher sich die Schaufelblätter zumindest teilweise unter dem aufzunehmenden Produkt befinden.

## Beschreibung

Die Erfindung betrifft einen Portionsgreifer zum Aufnehmen und Fördern eines Lebensmittelprodukts mit wenigstens zwei auf einer longitudinalen Führung gelagerten, einander entgegengerichteten Schaufelblättern, die mittels eines Antriebsmittels zwischen einer äußeren Bereitschaftsposition und einer inneren Arbeitsposition bewegbar sind, bei welcher das Lebensmittelprodukt von den Schaufelblättern aufnehmbar ist.

Produktgreifer sind grundsätzlich bekannt und kommen beispielsweise in der Lebensmittelindustrie zum Einsatz, um Lebensmittelprodukte von einem ersten Fördermittel auf ein zweites Fördermittel umzusetzen, zu sortieren oder in eine Ver-packung einzubringen. Typischerweise sind die Produktgreifer an dem beweglichen Teil eines Roboters montiert.

Aus der GB 2 435 257 ist ein Produktgreifer für Lebensmittelprodukte bekannt, bei denen Schaufelblätter mit einer flexiblen Folie umgeben sind, die eine sanfte Aufnahme des Lebensmittelproduktes gewährleisten soll. Die Folie wird bei der Zustellbewegung der auf einer Längsführung gelagerten Schaufelblätter bewegt, um eine besonders schonende Aufnahme des Lebensmittelproduktes zu erreichen. Hierdurch soll eine Quetschung vermieden werden.

Die japanische Patentveröffentlichung 2 002 103 268 A beschreibt einen Produktgreifer der Fördergut für das Palettisieren vorbereiten soll. Er weist zusätzlich zu zwei seitlichen, schwenkbaren Schaufelblättern zwei ebenfalls schwenkbar gelagerte Stabilisatoren aufweist, die bei der Aufnahme des Produktes das Wegspringen derselben und während des Pressvorganges des Stempels ein seitliches Ausweichen des Förderguts verhindern sollen. Ein oberhalb angeordneter Stempel dient zum Zusammendrücken des Produkts.

Bei den aufzunehmenden Produkten kann es sich um einzelne Stücke oder Scheiben von beispielsweise Fleisch, Wurst, Käse, Schinken und dergleichen, oder um Portionen handeln, die sich aus mehreren solcher Stücke bzw. Scheiben zusammensetzen. Bei einer mehrere Scheiben umfassenden Portion können die einzelnen Scheiben beispielsweise geschindelt angeordnet sein. Hierbei müssen die einzelnen Scheiben nicht notwendigergeschindelt angeordnet sein. Hierbei müssen die einzelnen Scheiben nicht notwendigerweise plan aufeinander aufliegen, sondern sie können auch ein oder mehrfach umgeformt, gehäufelt oder auch gefaltet sein. Üblicherweise werden derartige aus mehreren Scheiben bestehende Portionen von Hand zusammengeschoben, d.h. bezüglich ihrer Länge verkürzt, damit sie in kürzere Verpackungen eingelegt werden können.

Der Erfindung liegt die Aufgabe zugrunde, einen Portionsgreifer zu schaffen, welcher ein Produkt sicher greift und gleichzeitig verpackungsgerecht in Form bringt.

Die Erfindung wird durch einen Produktgreifer mit den Merkmalen des Anspruchs 1 und insbesondere dadurch gelöst, dass Mittel zum Verkürzen des Lebensmittelprodukts in Richtung der Longitudinalführung und/oder quer hierzu vorhanden sind.

Im Gegensatz zum Stand der Technik ist es nicht das primäre Ziel der Erfindung, ein Produkt quetschfrei aufzunehmen, beziehungsweise für ein Komprimieren zu stabilisieren. Die Erfindung hat die Aufgabe, eine Lebensmittelportion sicher aufzunehmen und soweit zu komprimieren, dass sie in die vorgegebene Geometrie einer Verpackung passt.

Erfindungsgemäß erfüllt der Portionsgreifer eine Doppelfunktion, indem er zusätzlich zu seiner originären Aufgabe des Greifens eines Produkts die Verkürzung bzw. das Zusammenschieben des Produkts übernimmt.

Da der erfindungsgemäße Produktgreifer das zu handhabende Produkt - beispielsweise eine Portion aus mehreren Scheiben - nicht nur greift, sondern zusammenrafft und auch komprimiert, braucht das Produkt nicht mehr von Hand zusammengeschoben werden. Stattdessen kann der Produktgreifer das aufgegriffene und gleichzeitig verkürzte Produkt in eine entsprechende Verpackung einlegen. Im Ergebnis lässt sich durch den erfindungsgemäßen Produktgreifer ein manueller Arbeitsgang einsparen, wodurch das Produkthandling bzw. die Produktverarbeitung vereinfacht, hygienischer und kostengünstiger wird.

Vorteilhafte Ausbildungen der Erfindung sind den Unteransprüchen, der Beschreibung und der Zeichnung zu entnehmen.

Die Mittel zum Verkürzen des Produkts können so beschaffen sein, dass das Produkt in mehr als einer Richtung, beispielsweise in zwei zueinander rechtwinkligen Richtungen, zusammengeschoben wird. Eine besonders einfache bauliche Ausführungsform lässt sich realisieren, wenn die Verkürzungsmittel so ausgebildet sind, dass sie das Produkt in der Bewegungsrichtung der Schaufelblätter zusammenschieben.

Gemäß einer bevorzugten Ausführungsform sind die Verkürzungsmittel zwischen den Schaufelblättern angeordnet. Es handelt sich bei den Verkürzungsmitteln also um von den Schaufelblättern separate Bauteile. Auf diese Weise ist es grundsätzlich möglich, die Verkürzungsmittel unabhängig von der Bewegung der Schaufelblätter zu betätigen.

Alternativ dazu ist aber auch eine Ausführungsform denkbar, bei welcher ein aufzunehmendes Produkt durch die Schaufelblätter selbst bzw. durch Halter für die Schaufelblätter zusammengeschoben wird. In diesem Fall ist die Verkürzung des Produkts an die Bewegung der Schaufelblätter gekoppelt.

Die Verkürzungsmittel können zwischen einer Ruhelage, in welcher sie zu einem aufzunehmenden Produkt beabstandet sind, und einer Aktivlage, in welcher sie mit einem aufgenommenen Produkt in Eingriff stehen und dieses raffen, verstellt werden.

Beispielsweise können die Verkürzungsmittel zwei zueinander beabstandete Klappen umfassen, die jeweils zwischen einer ersten, zumindest annähernd horizontalen Lage (Ruhelage) und einer zweiten, im Wesentlichen vertikalen Lage (Aktivlage) um eine Schwenkachse verschwenkbar sind, welche im Wesentlichen rechtwinklig zu der Bewegungsrichtung der Schaufelblätter orientiert ist.

Alternativ ist aber auch eine Ausführungsform denkbar, bei welcher die Verkürzungsmittel zwei zueinander beabstandete, insbesondere vertikal orientierte, Schieber umfassen, die zwischen einer ersten Stellung (Ruhelage), in welcher sie einen größeren Abstand zuein-ander aufweisen, und einer zweiten Stellung (Aktivlage), in welcher sie einen kleineren Abstand zueinander aufweisen, verschiebbar sind.

Gemäß einer weiteren Ausführungsform ist ein Koppel-Mechanismus vorgesehen, durch welchen die Bewegung der Schaufelblätter aus ihrer ersten Position in ihre zweite Position in eine Verstellung der Verkürzungsmittel aus ihrer Ruhelage in ihre Aktivlage umsetzbar ist. Durch den Mechanismus ist die Verstellung der Verkürzungsmittel an die Bewegung der Schaufelblätter gekoppelt, so dass kein separater Antrieb für die Verstellung der Verkürzungsmittel vorgesehen zu werden braucht.

Gemäß einer besonders einfachen baulichen Ausführungsform umfasst der Mechanismus mit den Schaufelblättern verbundene Rollen und an den Verkürzungsmitteln ausgebildete Schrägflächen, auf welche die Rollen auflaufen können. Dieser Mechanismus eignet sich insbesondere für die Verstellung von Klappen umfassenden Verkürzungsmitteln.

Vorteilhafterweise sind Arretiermittel zur Arretierung der Verkürzungsmittel in ihrer Ruhelage und/oder ihrer Aktivlage vorgesehen. Die Arretiermittel können beispielsweise Magnete umfassen.

Gemäß einer weiteren Ausführungsform ist ein Stempel zum Niederdrücken eines aufgenommenen Produkts an einem Ablageort vorgesehen. Beispielsweise kann der Stempel dazu dienen, ein aufgenommenes Produkt zu komprimieren und in eine darunter befindliche Verpackung einzubringen.

Bevorzugt ist der Stempel zwischen einer angehobenen Bereitschaftslage, in welcher eine dem aufgenommenen Produkt zugewandte Unterseite des Stempels zu dem Produkt beabstandet ist, und einer abgesenkten Drucklage bewegbar, in welcher die Stempelunterseite etwa auf der Höhe einer durch die Schaufelblätter definierten Schaufelblattebene oder darunter liegt. Der Hub des Stempels kann größer als die maximale Dicke eines aufzunehmenden Produkts sein, so dass sich ein abzulegendes Produkt wirksam in eine unter der Schaufelblattebene angeordnete Verpackung hineindrücken lässt. Vorteilhafterweise ist der Stempel zwischen den Verkürzungsmitteln angeordnet. Dabei entspricht die Ausdehnung des Stempels in Bewegungsrichtung der Schaufelblätter gesehen bevorzugt im Wesentlichen dem Abstand der Verkürzungsmittel in ihrer Aktivlage. Die Verkürzungsmittel bilden einen Kanal, in dem das komprimierte Produkt liegt und über dessen im Wesentlichen gesamte Breite der Stempel auf das komprimierte Produkt wirkt, wodurch ein abzulegendes Produkt kontrolliert und mit einer gleichmäßigen Druckverteilung in eine Verpackung hineingedrückt werden kann.

Durch in ihrer Aktivlage arretierte Verkürzungsmittel ist sichergestellt, dass ein aufgenommenes Produkt bei seiner Freigabe seine verkürzte Gesamtlänge beibehält.

Um die Verkürzungsmittel aus ihrer Drucklage lösen zu können, umfasst der Produktgreifer vorzugsweise einen entsprechenden Lösemechanismus. Der Lösemechanismus kann an dem Stempel und an den Verkürzungsmitteln vorgesehene Magnete umfassen, die so angeordnet und gepolt sind, dass sich die Magnete des Stempels und die Magnete der Verkürzungsmittel abstoßen, wenn der Stempel seine abgesenkte Lage erreicht. Die Lösung der Verkürzungsmittel aus ihrer Drucklage erfolgt auf diese Weise selbsttätig beim Ablegen eines aufgenommenen Produkts, insbesondere dann, wenn das abzulegende Produkt vollständig in seine Verpackung hineingedrückt ist.

Während die Verkürzungsmittel gemäß einer vorteilhaften Ausführungsform durch das Zusammenfahren der Schaufelblätter aus ihrer Bereitschaftslage in ihre Aktivlage gebracht werden, ist der umgekehrte Vorgang, d.h. die Verstellung der Verkürzungsmittel aus ihrer Aktivlage in ihre Ruhelage von der Bewegung der Schaufelblätter unabhängig und vorzugsweise an das Erreichen der abgesenkten Lage durch den Stempel koppelbar.

Bei einer weiteren Ausführungsform der Erfindung weisen die Verkürzungsmittel zwei in Richtung einer ersten Longitudinalführung verstellbare Klappen auf. Die Klappen sind über doppelarmige Lenker miteinander bewegungsverbunden und verfügen vorzugsweise über einen gemeinsamen Stellantrieb.

Auch in Querrichtung zur ersten Longitudinalführung können zwei einander gegengerichtete feststellbare Klappen vorhanden sein, die wiederum vorzugsweise mit Hilfe eines doppelarmigen Lenker miteinander bewegungsverbunden sind. Auch sie können mit Hilfe eines vorzugsweise gemeinsamen Stellantriebes gleichzeitig aus einer Bereitschafts- in eine Arbeitsstellung bewegt werden.

Die zweite Longitudinalführung für seitliche Klappen ist vorzugsweise im rechten Winkel zur ersten Longitudinalführung ausgerichtet.

Die eigentliche Verbindung zwischen den doppelarmigen Lenkern und den Klappen erfolgt jeweils über gelenkig gelagerte Verbindungsarme.

Die Schaufeln, die Klappen, aber auch der Stempel können jeweils einzeln oder gemeinsam Einschnitte zur Bildung von Fingern aufweisen. Die Einschnitte, beziehungsweise die Finger bieten die Möglichkeit, dass diese Teile vornehmlich in ihrer jeweiligen Arbeitsposition ineinandergreifen können, so dass sich die Schaufel und/oder die Klappen und/oder der Stempel überlappen können. Die gleiche Möglichkeit ist auch für den Stempel gegeben.

Die Klappen können im Querschnitt U- beziehungsweise V-förmig gestaltet sein, um das Produkt bei Arbeitsstellung der Klappen zu verkürzen, also zu komprimieren.

Nachfolgend wird die Erfindung anhand vorteilhafter Ausführungsformen unter Bezugnahme auf die beigefügte Zeichnung beschrieben.

Es zeigen:
- Figur 1: eine perspektivische Ansicht einer ersten Ausführungsform eines erfindungsgemäßen Produktgreifers mit offenem Schaufeln von schräg oben;
- Figur 2: eine Seitenansicht des Produktgreifers von Fig. 1;
- Figur 3: eine Seitenansicht des Produktgreifers von Fig. 1 mit halb geschlossenen Schaufeln;
- Figur 4: eine Seitenansicht des Produktgreifers von Fig. 1 mit vollständig geschlossenen Schaufeln und Klappen;
- Figur 5: eine Seitenansicht des Produktgreifers von Fig. 1 mit offenen Schaufeln und heruntergeklappten Verkürzungsmitteln;
- Figur 6: eine Seitenansicht des Produktgreifers von Fig. 1 mit offenen Schaufeln und abgesenktem Stempel;
- Figur 7: eine perspektivische Ansicht einer weiteren Ausführungsform der Erfindung, wobei sich sowohl die Schaufeln, als auch die Verkürzungsmittel jeweils in ihrer Bereitschaftsstellung befinden;
- Figur 8: eine perspektivische Ansicht der Ausführungsform von Figur 7, wobei sowohl die Schaufeln als auch die Verkürzungsmittel zum Ergreifen und Komprimieren des Produkts aufeinander zubewegt haben;
- Figur 9: eine perspektivische Ansicht der Ausführungsform von Figur 7, bei welcher sich die Schaufeln und die Klappen sich in ihrer jeweiligen Arbeits- Endstellung befinden;
- Figur 10: eine perspektivische Ansicht der Ausführungsform von Figur 7, wobei die Schaufeln sich in ihrer äußeren Position befinden und der Stempel nach unten bewegt ist, um das von den seitlichen Klappen komprimierte Produkt nach unten in die nicht dargestellte Verpackung einzubringen;
- Figur 11: eine perspektivische Darstellung der Ausführungsform von Figur 7, bei welcher auch die Klappen und der Stempel zurückgefahren sind;
- Figur 12: eine perspektivische Ansicht der Ausführungsform von Figur 7, korrespondierend zur Anordnung der Ausführungsform von Figur 9 jedoch mit Blick von unten;
- Figur 13: eine Druntersicht auf die zweite Ausführungsform mit in Arbeitsposition befindlichen Schaufeln und Klappen, und
- Figur 14: eine Draufsicht auf die zweite Ausführungsform mit Blick auf die Rahmenstruktur und die darin gelagerten doppelarmigen Lenker.

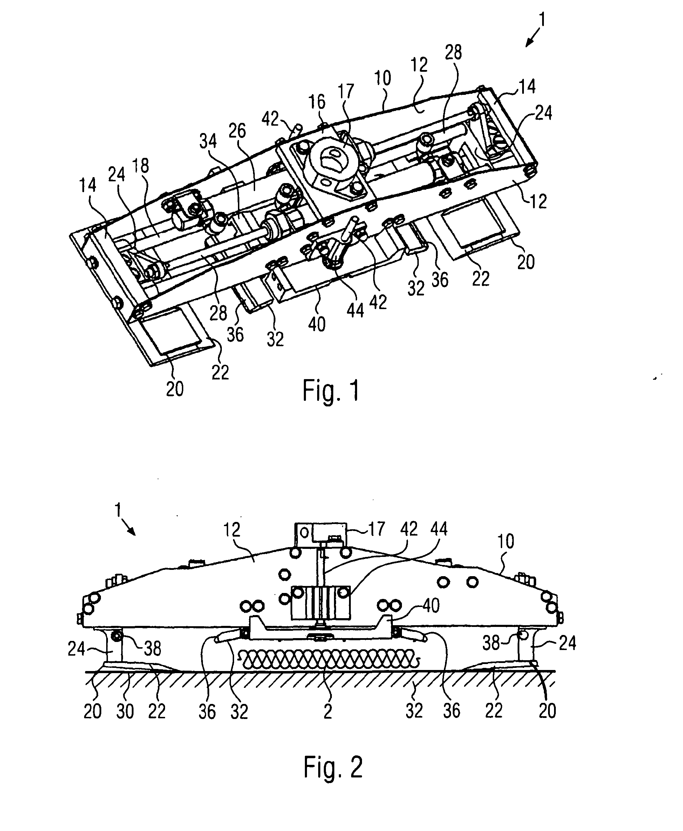

Der in den Figuren 1 bis 6 dargestellte Produktgreifer 1 einer ersten Ausführungsform besitzt eine Rahmenstruktur 10, welche zwei zueinander beabstandete und sich im Wesentlichen parallel zueinander erstreckende Seitenbleche 12 umfasst, die im Bereich ihrer äußeren Enden durch zwei Querleisten 14 und in einem mittleren oberen Bereich durch einen Quersteg 16 miteinander verbunden sind. An dem Quersteg 16 ist ein Adapter 17 angebracht, welcher die Montage des Produktgreifers an einem Roboterarm ermöglicht.

An den Querleisten 14 sind zwei Führungsstangen 18 befestigt, die sich zueinander beabstandet parallel zu den Seitenblechen 12 erstrecken. Die Führungsstangen 18 dienen zur Führung zweier Schaufeln 20.

Jede Schaufel 20 umfasst ein Schaufelblatt 22, welches mittels eines Schaufelblatthalters 24 verschiebbar an den Führungsstangen 18 gelagert ist.

Zur Verschiebung der Schaufeln 20 entlang den Führungsstangen 18 ist jeder Schaufel 20 ein, beispielsweise fluidisch betätigbarer, Betätigungszylinder 26 zugeordnet, welcher oberhalb der Führungsstangen 18 angeordnet ist und einen parallel zu den Führungsstangen 18 bewegbaren Kolben 28 besitzt, der im Bereich seines freien Endes mit dem zugeordneten Schaufelblatthalter 24 verbunden ist. Die Betätigungszylinder 26 werden von der Rahmenstruktur 10 getragen.

Es versteht sich, dass grundsätzlich auch nur ein Betätigungszylinder oder ein gemeinsamer elektrischer Antrieb zur Verschiebung der Schaufeln 20 vorgesehen sein kann.

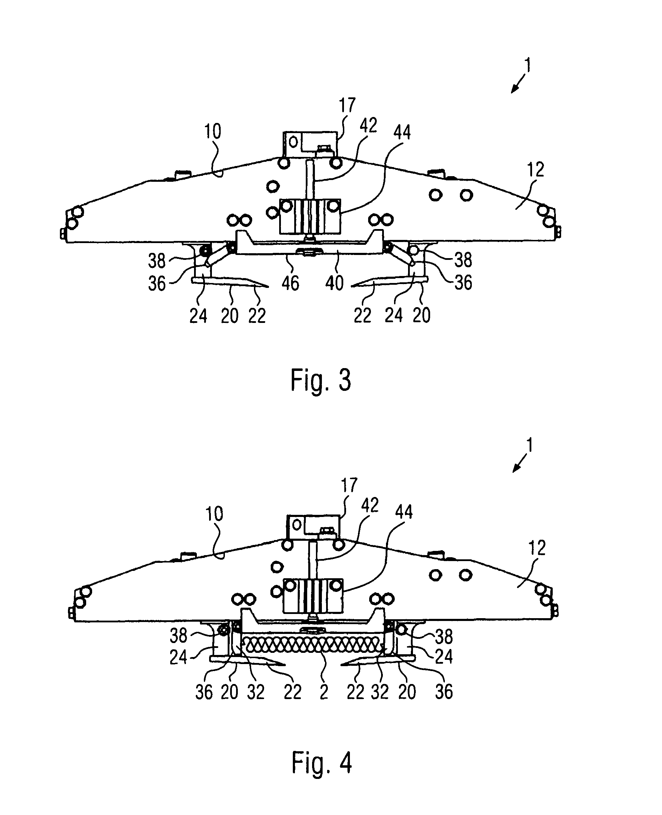

Mit Hilfe der Betätigungszylinder 26 lassen sich die Schaufeln 20 zwischen einer ersten Position, in welcher die Schaufelblätter 22 einen maximalen Abstand zueinander aufweisen und auf gegenüberliegenden Seiten eines aufzunehmenden Produkts 2, beispielsweise einer Portion von gehäufelten bzw. gefalteten Wurst-, Schinken- oder Käsescheiben, auf eine Auflage 30 für das aufzunehmende Produkt 2 aufsetzbar sind (Fig. 2) und einer zweiten Position bewegen, in welcher die Schaufeln 20 einen minimalen Abstand zueinander aufweisen und sich die Schaufelblätter 22 zumindest teilweise unter dem aufzunehmenden Produkt 2 befinden (Fig. 4).

Um die Länge eines aufzunehmenden Produkts 2 in Bewegungsrichtung der Schaufeln 20 gesehen zu verkürzen, d.h. das aufzunehmende Produkt 2 in besagter Richtung zu komprimieren, sind zwei zwischen den Schaufeln 20 angeordnete Klappen 32 an der Rahmenstruktur 10, genauer gesagt an jeweiligen sich zwischen den Seitenblechen 12 erstreckenden und an diesen befestigten Querträgern 34, verschwenkbar gelagert. Die entsprechenden Schwenkachsen erstrecken sich rechtwinklig zu den Führungsstangen 18 und somit zu der Bewegungsrichtung der Schaufeln 20.

Die Klappen sind jeweils zwischen einer ersten, zumindest annähernd 15 horizontalen Lage (Fig. 2) und einer zweiten, im Wesentlichen vertikalen Lage (Fig. 4) verschwenkbar. Zur Arretierung der Klappen 32 in ihrer ersten und zweiten Lage sind Magnete in die Klappen 32 eingelassen, die mit entsprechend in die Querträger 34 eingelassenen Magneten anziehend zusammenwirken.

Im Bereich ihrer freien Enden weisen die Klappen 32 schaufelseitige Schrägflächen 36 auf. An den Schaufelblatthaltern 24 sind quer zur Bewegungsrichtung der Schaufeln 20 orientierte Rollen 38 derart angeordnet, dass die Rollen 38 beim Zusammenfahren der Schaufeln 20 auf die Schrägflächen 36 der in ihrer ersten Lage befindlichen, Klappen 32 auflaufen (Fig. 3) und die Klappen 32 hierdurch in ihre zweite Lage bringen (Fig. 4).

Die Länge der Klappen 32 ist so gewählt, dass die freien Enden der Klappen 32 in der zweiten Lage der Klappen 32 zumindest annähernd bis an die Schaufelblätter 22 heranreichen. Die Klappen 32 geraten bei ihrer Verschwenkung in die zweite Lage folglich mit dem aufzunehmenden Produkt in Eingriff und schieben dieses zusammen, wodurch die Länge des Produkts 2 in Bewegungsrichtung der Schaufeln 20 gesehen verkürzt wird. Die Breite der Klappen 32, d.h. ihre Abmessung quer zur Bewegungsrichtung der Schaufeln 20 gesehen, entspricht zumindest annähernd der Breite der Schaufelblätter 22.

Zwischen den Klappen 32 ist ein Stempel 40 angeordnet, der sich bei in ihrer zweiten Lage befindlichen Klappen 32 im Wesentlichen über den gesamten Abstand zwischen den Klappen 32 erstreckt. Die Breite des Stempels 40 entspricht ebenfalls zumindest annähernd der Breite der Schaufelblätter 22.

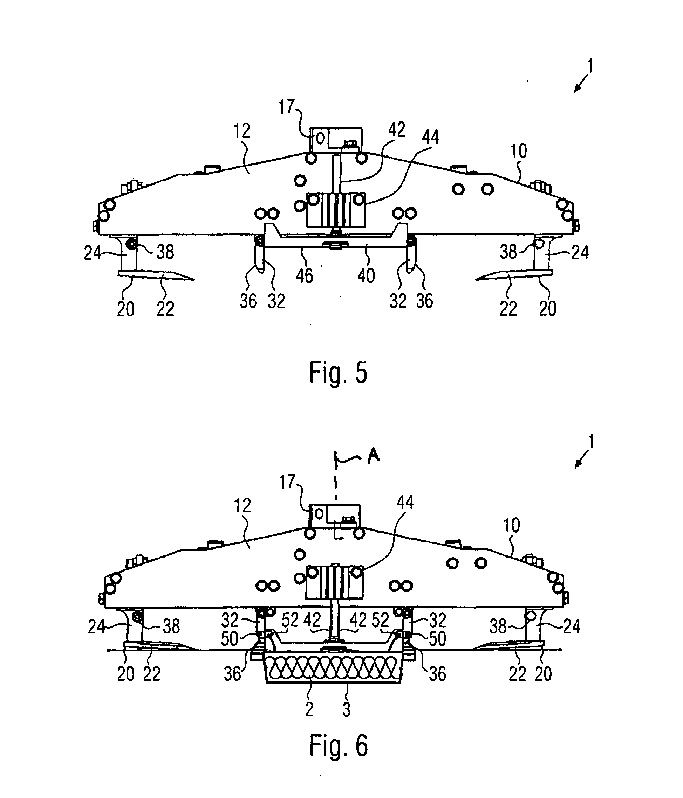

Mittels eines in den Figuren nicht dargestellten, beispielsweise pneumatisch oder hydraulisch betätigbaren, Zylinders lässt sich der Stempel 40 zwischen einer angehobenen Lage (Fig. 1 bis 5) und einer abgesenkten Lage (Fig. 6) bewegen. Dabei ist der Stempel 40 mit Hilfe von an diesem angebrachten und sich im Wesentlichen rechtwinklig zu den Führungsstangen 18 erstreckenden Führungsstäben 42, die sich durch an den Außenseiten der Seitenbleche 12 angebrachte Führungselemente 44 hindurch erstrecken, geführt.

Der Hub des Stempels 40 ist so gewählt, dass eine den Schaufelblättern 22 zugewandte Unterseite 46 des Stempels 40 im angehobenen Zustand des Stempels 40 zu der Oberseite eines aufgenommenen Produkts beabstandet ist, während die Stempelunterseite 46 im abgesenkten Zustand des Stempels 40 etwas tiefer als eine durch die Schaufelblätter 22 definierte Schaufelblattebene 48 liegt.

Wie in Fig. 6 dargestellt ist, sind im Bereich der freien Enden der Klappen 32 stempelseitig Magnete 50 eingelassen. In den Stempel 40 sind klappenseitig ebenfalls Magnete 52 eingelassen, welche die gleiche Polung wie die Magnete 50 der Klappen 32 besitzen und derart angeordnet sind, dass sie bei vollständig abgesenktem Stempel 40 in den Bereich 5 der Magnete 50 der Klappen 32 gelangen. Durch ihre gleiche Polung stoßen sich die Magnete 52 des Stempels 40 und die Magnete 50 der Klappen 32 ab, wodurch die Klappen 32 aus ihrer zweiten Lage gelöst und - gegebenenfalls durch Federkraft unterstützt - wieder in ihre erste Lage zurückklappen.

Nachfolgend wird die Funktionsweise der ersten Ausführungsform des Produktgreifers erläutert:
Ausgehend von dem offenen Zustand des Produktgreifers, in welchem die Schaufeln 20 sich in ihrer ersten Position befinden, d.h. also einen maximalen Abstand zueinander aufweisen, wird der Produktgreifer auf ein aufzunehmendes Produkt abgesenkt, bis die Schaufelblätter 22 auf gegenüberliegenden Seiten des Produkts auf der Produktauflage 30 aufsetzen (Fig. 2).

Durch eine entsprechende Betätigung der Betätigungszylinder 26 werden die Schaufelblätter 22 nun aufeinander zu bewegt und unter das aufzunehmende Produkt geschoben. Hierbei laufen die Rollen 38 der Schaufeln 20 auf die Schrägflächen 36 der Klappen 32 auf, wodurch die Klappen 32 heruntergeklappt, d.h. in ihre vertikale zweite Lage verschwenkt werden, 25 und dabei das aufzunehmende Produkt in der Bewegungsrichtung der Schaufeln 20 zusammenschieben, d.h. also dessen Länge verkürzen (Fig. 3 und 4).

In diesem Zustand des Produktgreifers wird das aufgenommene Produkt von seinem Aufnahmeort zu einem Ablageort transportiert. Dabei wird das aufgenommene Produkt durch die vertikal gestellten Klappen 32 fixiert, so dass es nicht von den Schaufelblättern 22 rutschen kann.

An dem Ablageort wird der Produktgreifer abgesenkt, und die Schaufeln 20 werden durch die Betätigungszylinder 26 wieder auseinander gefahren, d.h. geöffnet (Fig. 5). Während des Auseinanderfahrens der Schaufeln 20 bleiben die Klappen 32 vertikal gestellt, damit das Produkt bei seiner Freigabe seine verkürzte Gesamtlänge beibehält.

Abschließend wird der Stempel 40 heruntergefahren, um das Produkt in eine Verpackung 3 hineinzudrücken (Fig. 6). Sobald der Stempel 40 seine tiefste Stellung erreicht, werden die Klappen 32 durch die sich abstoßenden Magnete 50, 52 aus ihrer Vertikalstellung gelöst, und die Klappen 32 schwenken wieder in ihre Horizontalstellung zurück. Der Produktgreifer befindet sich nun wieder in seinem Ausgangszustand und ist bereit für die Aufnahme eines neuen Produkts.

Obwohl die Figuren lediglich einen Produktgreifer mit in Form von Klappen 32 ausgebildeten Verkürzungsmitteln zeigen, ist darauf hinzuweisen, dass die Verkürzungsmittel gemäß einer alternativen Ausführungsform auch zwei zueinander beabstandete, insbesondere vertikal orientierte, Schieber umfassen können, die - z.B. an der Rahmenstruktur 10 geführt - zwischen einer ersten Stellung (Ruhelage), in welcher sie einen größeren Abstand zueinander aufweisen, und einer zweiten Stellung (Aktivlage), in welcher sie einen kleineren Abstand zueinander aufweisen, verschiebbar sind.

Die Bewegung der Schieber aufeinander zu kann dabei mit dem Zusammenfahren der Schaufelblätter 22 gekoppelt oder von diesen unabhängig sein.

Beim Ablegen eines aufgenommenen Produkts bleiben die Schieber bevorzugt so lange in ihrer zweiten Stellung arretiert, bis der Stempel 40 das Produkt in eine Verpackung hinein gedrückt hat. D.h. die Schaufelblätter 22 fahren auseinander, ohne die Schieber dabei "mitzunehmen".

Erst mit der anschließenden Aufwärtsbewegung des Stempels würden sich die Schieber dann wieder in ihre erste Stellung zurück bewegen. Dabei ist es denkbar, dass nicht nur die Arretierung der Schieber durch den abgesenkten Stempel gelöst wird, sondern dass das Auseinanderfahren der Schieber insgesamt mit der Aufwärtsbewegung gekoppelt ist. Selbstverständlich kann aber auch ein separater Antrieb für die Schieber vorgesehen sein, welcher ein Auseinanderfahren der Schieber unabhängig von der Stempelbewegung ermöglicht.

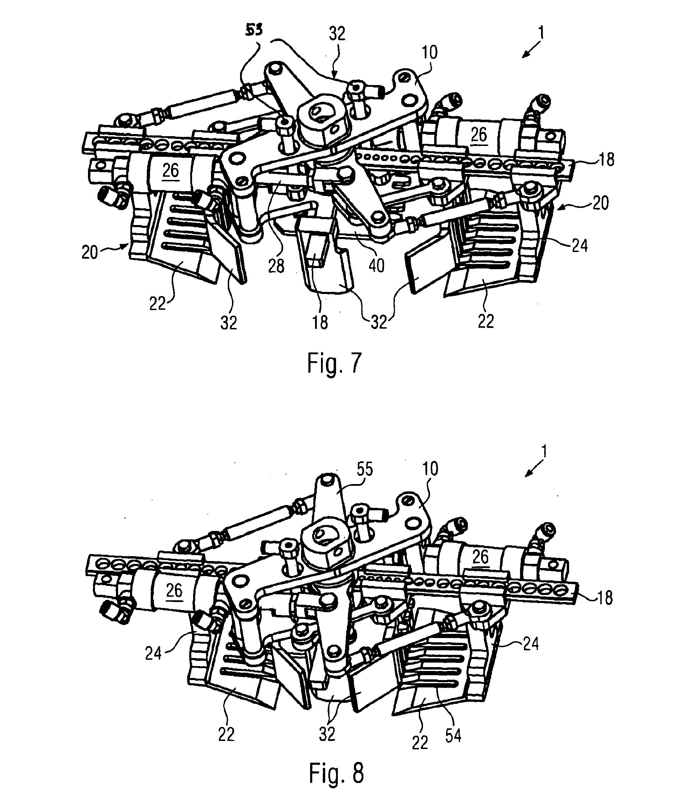

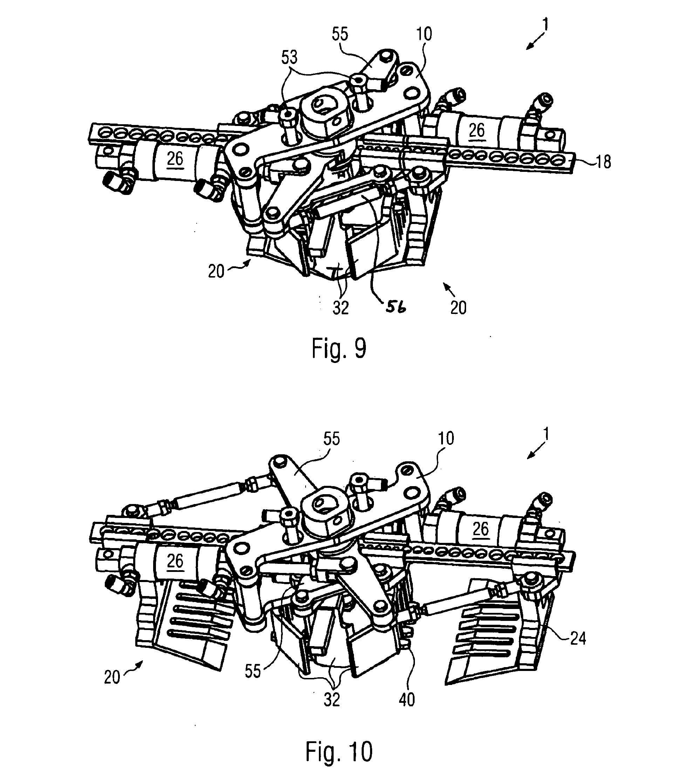

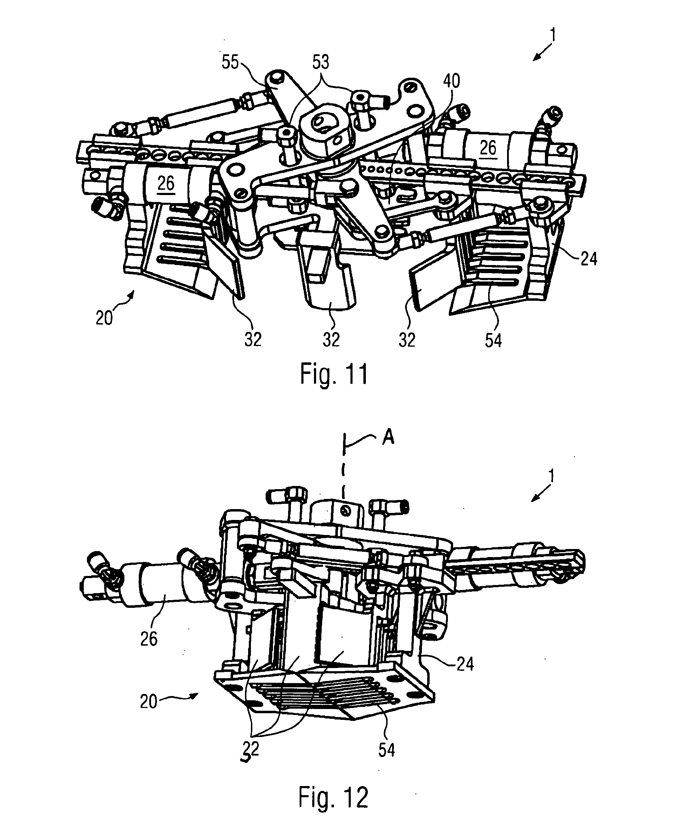

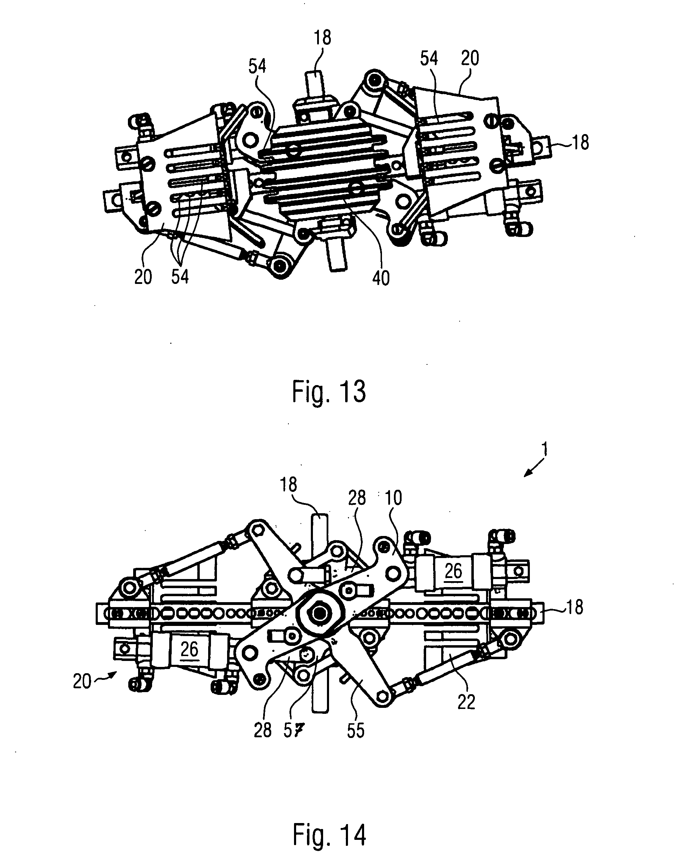

Die weitere Ausführungsform der Erfindung gemäß den Figuren 7 bis 14 betrifft einen Greifer 1 für einen Roboter, der Lebensmittelprodukte 2 aufnehmen kann, um sie anschließend in einer Verpackung 3 abzulegen. Bei den Lebensmittelprodukten 2 handelt es sich um aufgeschnittene Produkte wie zum Beispiel aufgeschnittene Wurst oder Schinkenprodukte. Diese Produkte werden nach dem Aufschneiden relativ ungeformt und zusammengehäuft auf ein Transportband abgelegt. Hier kommt es vor, dass die Produkte auf dem Transportband mehr Fläche belegen, wie ihnen in der Verpackung zusteht. Die Produkte werden daher mit der Aufnahme des Greifers zusammengerafft, so dass sie anschließend in die Verpackung passen.

Der Greifer 1 komprimiert die Produkte vorzugsweise in zwei Richtungen, so dass sie in ihrer kompletten Ausbreitung verkleinert werden. Es erfolgt ein Zusammenschieben in und/oder quer zur Förderrichtung.

Der Greifer 1 schiebt das Produkt 2 so zusammen, dass es kleiner ist wie die Fläche die es in der Verpackung 3 bedecken kann. Durch das Ablegen in der Verpackung 3, dehnt sich das Produkt wieder etwas, so dass die Verpackung 3 letztlich optimal ausgefüllt ist.

Die Bewegung zum Stauchen, bzw. Komprimieren des Produkts 2 erfolgt nahezu zeitgleich mit der Aufnahmebewegung der Schaufeln 20. Dabei ist denkbar, dass das Produkt erst komprimiert wird und anschließend vollständig von den Schaufeln untergriffen wird. Es ist aber auch denkbar, dass Produkt aufzunehmen, und es komplett zu untergreifen und anschließend zu stauchen. Das Untergreifen und das Stauchen kann auch nahezu zeitgleich erfolgen.

Eine Stauchung bzw. Verkleinerung der Fläche findet beispielsweise in folgendem Verhältnis statt: vor der Produktzusammenschiebung: Länge: ca. 160 mm, Breite: ca. 112 mm; nach der Produktzusammenschiebung: Länge: ca. 104 mm, Breite: ca. 98 mm. Diese Werte sind nur ein Beispiel, die in alle Richtungen variieren kann. Das Produkt muss nach dem Schneiden nicht immer die gleiche Ausbreitung annehmen

Die Bewegungen der einzelnen Klappen 32 und Schaufeln 20 kann in Abhängigkeit voneinander oder aber auch unabhängig voneinander erfolgen.

Es sind können drei Zylinder 26 als Stellantriebe für die Schaufeln 20, Klappen 32 und den Stempel 40 vorgesehen werden.

An der Rahmenstruktur 10 ist um eine vertikale Achse A ein erster im Doppellenker 55 verschwenkbar gelagert, der einerseits über Verbindungsarme 56 mit beiden Schaufeln 20 und andererseits über eine Kolbenstange 28 mit einem Stellantrieb 26 bewegungsverbunden ist. Wird der Stellantrieb 26 aktiviert, so verschwenkt sich der Doppellenker 55 um seine Achse. Mit ihm verschieben sich die einander entgegengerichteten Schaufeln 20 auf der Längsführung 18.

Ein zweiter Doppellenker 57 ist gleichfalls um die vertikale Achse A an der Rahmenstruktur 10 verschwenkbar gelagert. Er befindet sich unterhalb des schon angesprochenen Doppellenkers 55, der die Schaufeln 20 verstellen kann. Der Doppellenker 57 dient zum Verstellen der Klappen 32 und ist zu diesem Zweck mit einem weiteren Stellantrieb 26 verbunden, der wiederum über eine Kolbenstange 28 mit diesem Doppellenker 57 bewegungsverbunden ist. Letzterer verfügt auch über Verbindungsarme 56 als Bindeglied zu den Klappen 32.

Es sind jeweils zwei Klappen 32 den Schaufeln 20 vorgelagert und auf der Längsführung 18 gemeinsam mit diesen verschiebbar angeordnet. Zwei weitere Klappen 32 sind seitlich angeordnet und auf ein zur ersten Längsführung 18 quer gerichteten, zweiten Längsführung 18 verschieblich gelagert. Sie werden zusammen mit den anderen Klappen von dem bereits angesprochenen Doppellenker 57 und dem gemeinsamen Stellantrieb 26 beaufschlagt.

Ein nicht gezeigter Stellantrieb bewegt über vertikale Stangen 53 den Stempel 40, welcher das Produkt 2 sicher aus dem Greifer 1 in Richtung Verpackung 3 bewegt. Er drückt das Produkt 2 in Richtung Verpackung 3, während die Klappen es noch in der komprimierten Form halten. So wird sichergestellt, dass das Produkt 2 sich erst in der Verpackung und nach Verlassen des Greifers 1 wieder ausdehnt und somit einen optimalen Platz in der Verpackung 3 einnimmt.

Die Schaufeln 20 werden vorzugweise mit ihren vorderen Enden zeitgleich unter den Klappen 32 bewegt. Dadurch wird ein teilweises Durchrutschen des Produkt 1 unter die Klappen 32 während des Zusammendrückens verhindert.

Die Schaufeln 20, Klappen 32 und Stempel 40 greifen jeweils mit Fingern ineinander, die sich durch Einschnitte 54 ergeben. Sie verhindern ein Zurückbleiben von möglicher Weise eingeklemmten Lebensmittelresten.

## Patentansprüche

1. Portionsgreifer zum Aufnehmen und Fördern eines Lebensmittelprodukts mit wenigstens zwei auf einer longitudinalen Führung gelagerten, einander entgegengerichteten Schaufelblättern, die mittels mindestens eines Antriebsmittels zwischen einer äußeren Bereitschaftsposition und einer inneren Arbeitsposition bewegbar sind, bei welcher das Lebensmittelprodukt von den Schaufelblättern aufnehmbar ist,
**dadurch gekennzeichnet,**
**dass** Mittel (32) zum Verkürzen des Lebensmittelprodukts (2) in Richtung der Longitudinalführung (18) und/oder quer hierzu vorhanden sind.

2. Portionsgreifer nach Anspruch 1,
**dadurch gekennzeichnet,**
**dass** die Verkürzungsmittel (32) auf Longitudinalführungen (18) verstellbar angeordnet sind.

3. Portionsgreifer nach Anspruch 1 oder 2,
**dadurch gekennzeichnet, dass**
die Verkürzungsmittel (32) zwischen den Schaufelblättern (22) angeordnet sind.

4. Portionsgreifer roduktgreifer nach einem der vorhergehenden Ansprüche,
**dadurch gekennzeichnet, dass**
die Verkürzungsmittel (32) zwischen einer Ruhelage, in welcher sie mit einem aufzunehmenden Produkt außer Eingriff stehen, und einer Aktivlage, in welcher sie mit einem aufgenommenen Produkt in Eingriff stehen und dieses verkürzen, verstellbar sind.

5. Portionsgreifer, insbesondere nach einem der vorhergehenden Ansprüche,
**dadurch gekennzeichnet, dass**
die Verkürzungsmittel (32) wenigstens zwei zueinander beabstandete, gegenüberliegende Klappen (32) umfassen, die jeweils zwischen einer ersten, zumindest annähernd horizontalen Bereitschaftslage und einer zweiten, im Wesentlichen vertikalen Arbeitslage um eine Schwenkachse verschwenkbar sind, welche im Wesentlichen rechtwinklig zu der Bewegungsrichtung der Schaufelblätter (22) orientiert ist.

6. Portionsgreifer nach einem der vorhergehenden Ansprüche,
**dadurch gekennzeichnet, dass**
ein Mechanismus (36, 38) vorgesehen ist, durch welchen die Bewegung der Schaufelblätter (22) aus ihrer ersten Position in ihre zweite Position in eine Verstellung der Verkürzungsmittel (32) aus ihrer Ruhelage, in ihre Aktivlage umsetzbar ist.

7. Portionsgreifer nach einem der vorhergehenden Ansprüche,
**dadurch gekennzeichnet, dass**
der Mechanismus mit den Schaufelblättern (22) verbundene Rollen (38) und an den Verkürzungsmitteln (32) ausgebildete Schrägflächen (36) umfasst, auf welche die Rollen (38) auflaufen.

8. Portionsgreifer nach einem der vorhergehenden Ansprüche,
**dadurch gekennzeichnet, dass**
Arretiermittel zur Arretierung der Verkürzungsmittel (32) in ihrer Ruhelage und/oder ihrer Aktivlage vorgesehen sind.

9. Portionsgreifer nach einem der vorhergehenden Ansprüche,
**dadurch gekennzeichnet, dass**
die Arretiermittel Magnete umfassen.

10. Portionsgreifer nach einem der vorhergehenden Ansprüche,
**gekennzeichnet durch**
einen Lösemechanismus zur Lösung der Arretierung der Verkürzungsmittel (32) in ihrer Aktivlage.

11. Portionsgreifer nach einem der vorhergehenden Ansprüche,
**gekennzeichnet durch**
einen Stempel (40) zum Niederdrücken einer aufgenommenen Portion (2) an einem Ablageort.

12. Portionsgreifer nach einem der vorhergehenden Ansprüche,
**dadurch gekennzeichnet, dass**
der Stempel (40) zwischen einer angehobenen Lage, in welcher eine der aufgenommenen Portion (2) zugewandte Unterseite (46) des Stempels (40) zu der Portion (2) beabstandet ist, und einer abgesenkten 25 Lage bewegbar ist, in welcher die Stempelunterseite (46) etwa auf der Höhe einer durch die Schaufelblätter (22) definierten Schaufelblattebene oder darunter liegt.

13. Portionsgreifer nach einem der vorhergehenden Ansprüche,
**dadurch gekennzeichnet, dass**
der Stempel (40) zwischen den Verkürzungsmitteln (32) angeordnet ist, wobei bevorzugt die Ausdehnung des Stempels (40) in Bewegungsrichtung der Schaufelblätter (22) gesehen 5 im Wesentlichen dem Abstand der Verkürzungsmittel (32) in ihrer Aktivlage entspricht.

14. Portionsgreifer nach einem der vorhergehenden Ansprüche,
**dadurch gekennzeichnet, dass**
der Lösemechanismus an den Verkürzungsmitteln (32) und an dem Stempel (40) vorgesehene Magnete (50, 52) umfasst, die so angeordnet und gepolt sind, dass sich die Magnete (50) der Verkürzungsmittel (32) und die Magnete (52) des Stempels (40) abstoßen, wenn der Stempel (40) seine abgesenkte Lage erreicht.

15. Portionsgreifer nach einem der vorhergehenden Ansprüche,
**dadurch gekennzeichnet, dass**
die die Verkürzungsmittel (32) wenigstens zwei in Richtung der Longitudinalführung (18) verstellbare Klappen und/oder wenigstens zwei in Querrichtung hierzu verstellbare Klappen aufweisen.

16. Portionsgreifer nach einem der vorhergehenden Ansprüche,
**dadurch gekennzeichnet, dass**
die jeweils einander gegenüberliegenden Klappen (32) über einen doppelarmigen Lenker (55) miteinander bewegungsverbunden sind und einen Stellantrieb (26) aufweisen.

17. Portionsgreifer nach einem der vorhergehenden Ansprüche,
**dadurch gekennzeichnet, dass**
die Schaufeln (20) und/oder die Klappen (32) und/oder der Stempel (40) zwischen Einschnitten (54) Finger aufweisen, um in der jeweiligen Arbeitsposition ein Ineinandergreifen dieser Teile zu ermöglichen.

18. Portionsgreifer nach einem der vorhergehenden Ansprüche,
**dadurch gekennzeichnet, dass**
die in Richtung der Longitudinalführung (18) der Schaufelblätter (22) verstellbaren Klappen (32) auf der Longitudinalführung (18) der Schaufelblätter gelagert sind und/oder letztere U- beziehungsweise V-förmig zur Mitte des Produktgreifers hin geformt sind.
